# EUROPEAN PATENT SPECIFICATION

(11) **EP 2 282 868 B1**
(45) Date of publication and mention of the grant of the patent: **01.01.2014**
(21) Application number: 09741981.6
(22) Date of filing: 22.04.2009
(51) Int. Cl.: B23Q 1/00, B23Q 1/38, B23Q 1/48, B23Q 5/32

(54) **MACHINE TOOL, PARTICULARLY OF THE MILLING AND BORING TYPE**
WERKZEUGMASCHINE, IM BESONDEREN ZUM FRÄSEN UND BOHREN
MACHINE-OUTIL, EN PARTICULIER DU TYPE ALÉSEUSE-FRAISEUSE

(30) Priority: 08.05.2008 IT PD20080140
(43) Date of publication of application: 16.02.2011
(73) Proprietor: HPT SINERGY S.R.L., 35131 Padova (IT)
(72) Inventor: GUELI, Francesco, I-35030 Selvazzano Dentro (IT)
(74) Representative: Modiano, Micaela Nadia
(86) International application number: PCT/EP2009/054841
(87) International publication number: WO 2009/135763

(56) References cited:
- WO-A-2006/105951
- FR-E- 90 355
- US-A- 3 058 559

## Description

### Technical Field

The present invention relates to a machine tool particularly of the milling and boring type.

### Background Art

Milling and boring machine tools are currently known which comprise:
- a support for a spindle that accommodates coaxially a boring bar that can slide therein,
- means for joint rotation of the spindle and of the boring bar about a main working axis,
- means for the translational motion of the boring bar with respect to the spindle along the main axis.

A first model of this type of machine has the spindle connected to the support by means of radial and axial rolling bearings and accommodates the boring bar, which can slide therein on plain bearings.

This type of machine tool has a motor for the joint rotation of the spindle and of the boring bar and a motor for the sliding of the boring bar in the spindle.

In order to ensure reliability and precision of the machining performed, the need is felt for a coupling between the boring bar and the spindle that has a high precision and can be obtained by reducing the coupling play to the minimum value that is technologically essential for the free sliding of the boring bar.

This entails complex and expensive machining to adapt the plain bearings, which require the use of specialized labor.

Further, one drawback of this type of machine consists of the degradation of the precision of such coupling, which is due to the progressive wear and corrosion of the plain bearings, to the full disadvantage of the quality of the operations that can be performed with such machines.

Another drawback of this type of machine is constituted by the fact that the possibility for dynamic balancing in rotation of the boring bar/spindle system is limited by the play between the boring bar and the plain bearings, which is necessary for mutual sliding.

A further drawback of this type of machine tool is that due to the thermal variations that occur during operation, the coupling play between the boring bar and the sliding bearings changes, to the full disadvantage of the centering and balancing stability of the boring bar in the spindle, with respect to the common main working axis, and to the disadvantage of the easy sliding of the spindle in the plain bearings.

One currently known solution aimed at obviating these drawbacks is constituted by a second model of machine tool that has a structure that comprises a single boring bar-spindle element, which is accommodated in a support and performs a rotary and translational motion therein on hydrostatically supported bearings.

In this manner, the boring bar-spindle element rotates and slides within the support, spaced from it by a film of fluid that is injected between them in the hydrostatically supported bearings.

Although this solution is appreciated in that it does not require extreme precisions in coupling between the boring bar-spindle element and its support, it has some drawbacks, which include causing high power dissipation due to the fluid drag opposed by the film of oil that is interposed between the bearings and the boring bar-spindle element and is entrained thereby during its rotation.

Moreover, for some machinings such as the boring of frames of hydraulic turbines, which can reach a few meters in diameter, it is necessary to use tools that have equally extensive diameters and may weight even hundreds of kilograms.

Machining with such tools, therefore, can be performer with the required precision and reliability only by fixing the tool to an element that has a high rigidity and torsional strength.

In machines of the first described model, i.e., with the boring bar supported in the spindle by means of plain bearings, therefore, the stresses generated during such machinings force the fixing of the tool directly to the spindle, whose diameter and stiffness of its connection to the support are such as to ensure reliable machining.

The second machine model, with the boring bar-spindle element supported by hydrostatically supported bearings, has the boring bar-spindle element that has a smaller diameter than the spindle of the first described machine model.

This is done in order to contain fluid losses at the hydrostatically supported bearings, which as is known increase as the relative speed of the mutually moving elements increases and therefore, for an equal angular velocity, increase as their diameter increases.

Therefore, the boring bar-spindle element currently does not have characteristics of stiffness that allow its use for machinings with very large tools.

US 3 058 559 A discloses a spindle mounting for machine tools having a combination of elements as set forth in the pre-characterizing portion of the appended claim 1.

### Disclosure of the Invention

The aim of the present invention is to provide a machine tool that obviates these drawbacks, by allowing a coupling of the boring bar in the spindle that is simple to industrialize, so as to not require complex and expensive adaptation machinings thereof.

Within this aim, an object of the invention is to provide a machine tool that has high stiffness of the coupling of the spindle with its support and allows to have a spindle whose diameter is such as to allow effective use of tools of considerable sizes and weights that are fixed directly to the spindle.

Another object of the invention is to provide a machine tool that allows to use hydrostatic bearings for supporting the boring bar in the spindle, the supply of which requires lower power dissipations due to fluid drag than currently known machine tools.

Another object of the invention is to provide a machine tool that is easier to manufacture, and can be produced with relatively low costs.

In accordance with the invention, there is provided a machine tool, particularly of the milling and boring type, as defined in the appended claims.

### Brief description of the drawings

Further characteristics and advantages of the invention will become better apparent from the following detailed description of some preferred but not exclusive embodiments of the machine tool according to the invention, illustrated by way of non-limiting example in the accompanying drawings, wherein:
Figures 1 and 2 are enlarged-scale schematic sectional views of details of two currently known machine tools;
Figure 3 is an enlarged-scale partially sectional view of a detail of a machine tool according to the invention;
Figures 4 and 5 are enlarged-scale views of a detail of the machine tool according to the invention in various operating configurations;
Figures 6 and 7 are respectively a front elevation view and a perspective view, in enlarged scale and partially in cross-section, of another detail of the machine tool according to the invention;
Figures 8 and 9 are enlarged-scale and partially sectional views of details of the machine tool according to the invention;
Figures 10, 1 and 12 are enlarged-scale and partially sectional views of details of the machine tool according to the invention in various embodiments.

### Ways of carrying out the Invention

It is noted that anything found to be already known during the patenting process is understood not to be claimed and to be the subject of a disclaimer.

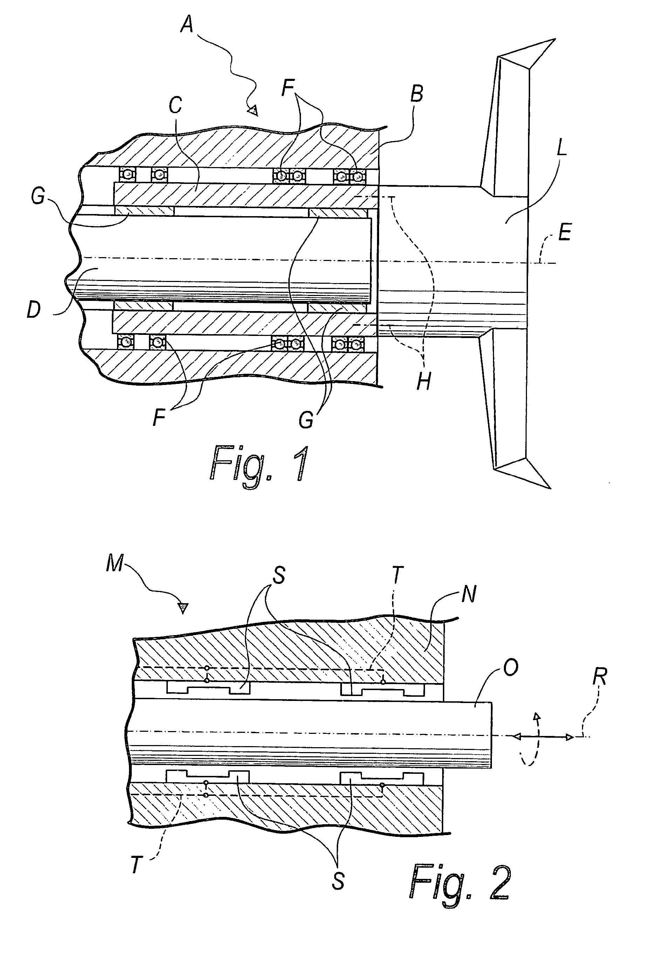

With reference to Figure 1, the reference letter A generally designates a first currently known model of machine tool, which comprises
- a support B for a spindle C that accommodates coaxially a boring bar D that can slide therein,
- means for joint rotation of the spindle and of the boring bar about a main working axis E,
- means for translational motion of the boring bar with respect to the spindle along the main axis E.

The spindle C is connected to the support B by means of radial and axial rolling bearings F and accommodates the boring bar D, which can slide therein on plain bearings G.

Fixing means H, schematically designated by dot and dash lines, lock to the spindle C a large tool L in order to turn it.

In Figure 2, the reference letter M generally designates a second currently known model of machine tool, which comprises
- a support N for a single boring bar-spindle element O that can rotate therein about a main working axis R, and can slide along it,
- means for the translational motion of the spindle-boring bar O with respect to the support N along the main axis R.

The spindle-boring bar O is connected and supported by the support N by means of hydrostatically supported bearings S.

In this manner, during operation, the boring bar-spindle O rotates and slides within the support N, spaced from it by a film of fluid that is injected between them in the hydrostatically supported bearings S, such fluid being fed to them by means of ducts T provided through the support N.

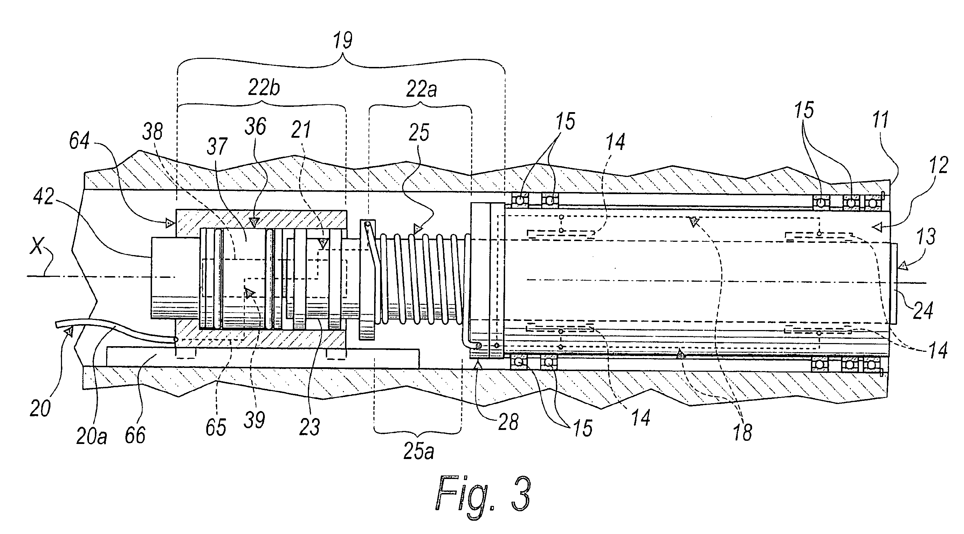

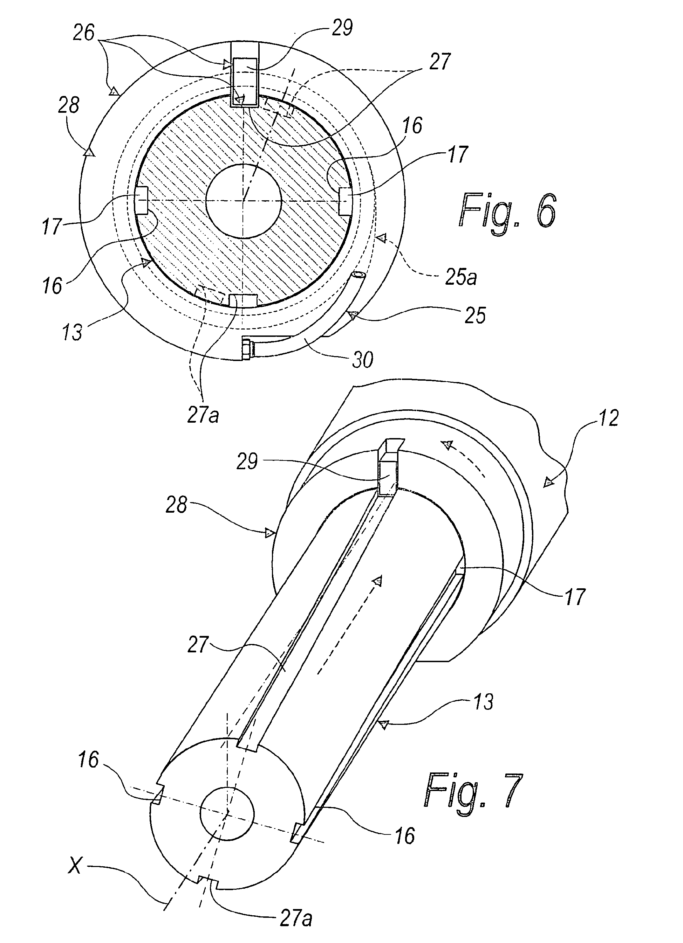

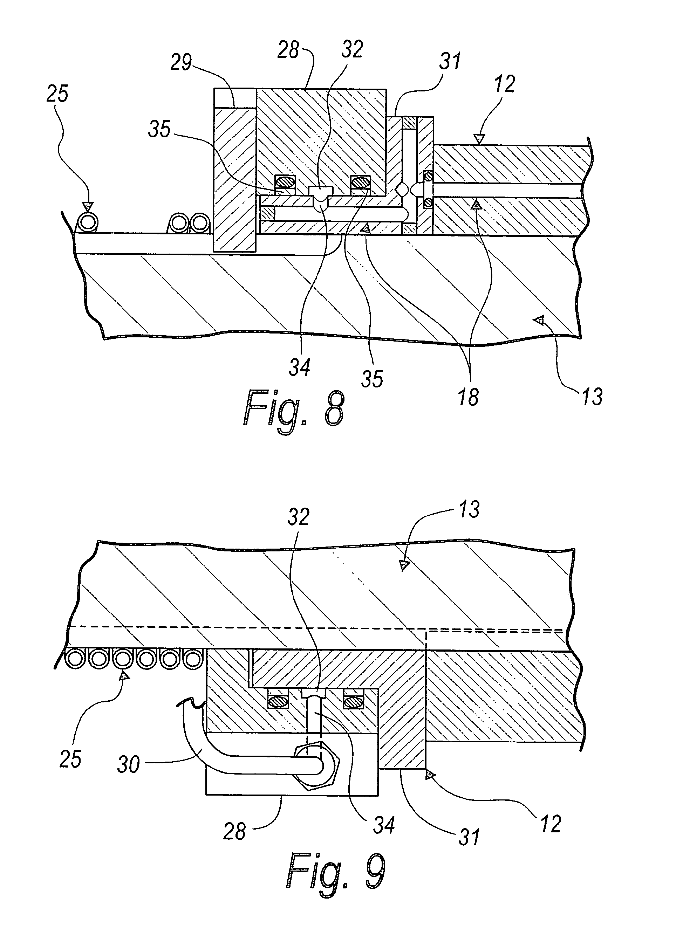

With reference to Figures 3 to 12, the reference numeral 10 generally designates a machine tool, particularly of the milling and boring type, which comprises
- a support 11 for a spindle 12 that accommodates coaxially a boring bar 13 that is connected thereto by means of hydrostatically supported bearings 14,
- means for the joint rotation of the spindle 12 and of the boring bar 13 about a main working axis X,
- means for the translational motion of the boring bar 13 with respect to the spindle 12 along the main axis X.

Such joint rotation means are of a per se known type and comprise for example
- rolling bearings 15 that connect the spindle 12 to the support 11, and
- longitudinal slots 16, which are formed along generatrices of the surface of the boring bar 13 and engage slidingly keys 17 for rotary entrainment that protrude internally from the spindle 12.

The means for the translational motion of the boring bar 13 with respect to the spindle 12, not shown in the accompanying figures, are of a per se known type; for example, they comprise an actuator that is connected to the support 11 and is adapted to produce the translational motion of the boring bar 13 with respect to it.

Moreover, through the spindle 12 there are first ducts 18 for feeding fluid to the hydrostatically supported bearings 14 of the boring bar 13.

A particularity of the machine tool 10 according to the invention is that it comprises means 19 for transmitting the fluid from a provided distribution unit 20, which is substantially fixed to the support 11, to the first ducts 18, which in operating conditions rotate together with the spindle 12.

The transmission means 19 comprise second ducts 21 for supplying fluid which are provided through the boring bar 13, and further comprise advantageously
- first means 22a for connection of the second ducts 21 to the first ducts 18 and
- second means 22b for connection of the second ducts 21 to the distribution unit 20.

The connection means 22a and 22b are adapted to transmit fluid from the distribution unit 20 to the hydrostatically supported bearings 14.

The second ducts 21 are provided conveniently through a first end 23 of the boring bar 13 that lies opposite a second end 24 thereof that is equipped to support a tool.

The first connection means 22a preferably comprise at least one tubular element 25 that connects the second ducts 21 to the first ducts 18.

Conveniently, the tubular element 25 has at least one portion 25a that is wound spirally around the boring bar 13 and makes the tubular element 25 elastically deformable.

The transmission means 19 advantageously comprise means 26 for preventing the loosening of the spirally wound portion 25a on the boring bar 13, which conveniently comprise
- at least one slot 27, which is formed on the boring bar 13 and has a helical arrangement along the main axis X,
- an annular flange 28, which surrounds the boring bar 13 and is
connected to the spindle 12 so that it can rotate with respect to it about the main axis X.

The annular flange 28 has at least one tooth 29 that engages the slot 27.

Thus, when the boring bar 13 slides within the spindle 12, the tooth 29 slides within the slot 27.

The boring bar 13 is guided in its sliding within the spindle 12 by the entrainment keys 17, which prevent the mutual rotation of the elements 12 and 13 about the main axis X.

Therefore, since the slot 27 lies helically on the boring bar 13, during the sliding of the boring bar within the spindle 12 it imparts to the annular flange 28 a rotation that depends on the angle of the helix of the slot 27.

One end 30 of the spirally wound portion 25a is connected to the annular flange 28, so that when the annular flange 28 is rotated by way of the action of the sliding of the boring bar 13 in the spindle 12, it turns the end 30, winding or unwinding onto the boring bar 13 the spirally wound portion 25a.

Such angle of the helix is conveniently predefined so that during the sliding of the boring bar 13 in the spindle 12 the winding diameter of the spirally wound portion 25a on the boring bar 13 remains substantially constant.

Conveniently, the boring bar 13 is axially symmetrical and therefore there is advantageously a complementary slot 27a formed thereon in a position that is diametrically opposite with respect to the slot 27.

The spindle 12 advantageously comprises monolithically a male connector 31, which is crossed by the first ducts 18 and is inserted axially in the annular flange 28.

Inside the annular flange 28 there is conveniently an annular recess 32 that faces ports 33 of the first ducts 18 and is connected by means of at least one radial passage 34 to the end 30 of the tubular element 25 to receive the fluid from it.

Preferably, lateral gaskets 35 are provided which are arranged at both sides of the annular recess 32 to prevent seepage of fluid between the male connector 31 and the annular flange 28.

Advantageously, the second connection means 22b comprise an assembly with male-female coupling 36, which is composed of a stator 37 that is associated with the distribution unit 20 and of a rotor 38 that is associated with the boring bar 13.

Conveniently, third ducts 39 are provided which pass through the assembly with male-female coupling 36 and connect the second ducts 21 to the distribution unit 20.

In this manner, the stator 37 and the rotor 38, when coupled, form a device that is generally known as a rotary manifold and is adapted to transmit from the distribution unit 20 to the boring bar 13 the fluid intended for the hydrostatically supported bearings 14.

The boring bar 1 3 is conveniently hollow axially and is designed to accommodate a tubular rod 41 that passes through it axially and is intended to feed lubricant fluid to the tool.

Moreover, it is possible to provide a pusher 42 that is connected to the rod 41 and is adapted to push it reversibly along the main axis X through the boring bar 13 to disengage the tool from its second end 24.

Conveniently, the assembly with male-female coupling 36 has a passage compartment 43 for the rod 41.

An appendage 40 is advantageously connected to the boring bar 13 and protrudes from it at the first end 23.

A sliding hole 44 for the rod 41 is formed axially with respect to the appendage 40, and the appendage 40 has at least one part 45 that is designed to provide the rotor 38, which is conveniently of a type that is internal with respect to the stator 37, which advantageously comprises an annular element 46 for accommodating the rotor 38.

As an alternative, in a substantially equivalent manner, such rotor is of the type that is external with respect to the stator and such appendage has at least one part thereof that is designed to form said rotor.

The third ducts 39 comprise at least one radial hole 47 that is formed through the rotor 38 and faces an annular fluid distribution recess 48 formed inside the annular element 46.

Conveniently, there are gaskets 49 for retaining the fluid to contrast its seepage from the assembly with male-female coupling 36.

The gaskets 49 advantageously comprise sliding gaskets 50, which are preferably combined with fluid retention gaskets 51.

In a technical equivalent manner, it is possible to use pneumostatic gaskets as sealing gaskets 49, their provision being thus evident to the person skilled in the art and not being described further.

Further, at the fluid retention gaskets 51 conveniently there are fluid recovery ducts 52, so as to avoid the dispersion of the fluid outside the assembly with male-female coupling 36, thus avoiding the contamination of a second fluid that is external to it.

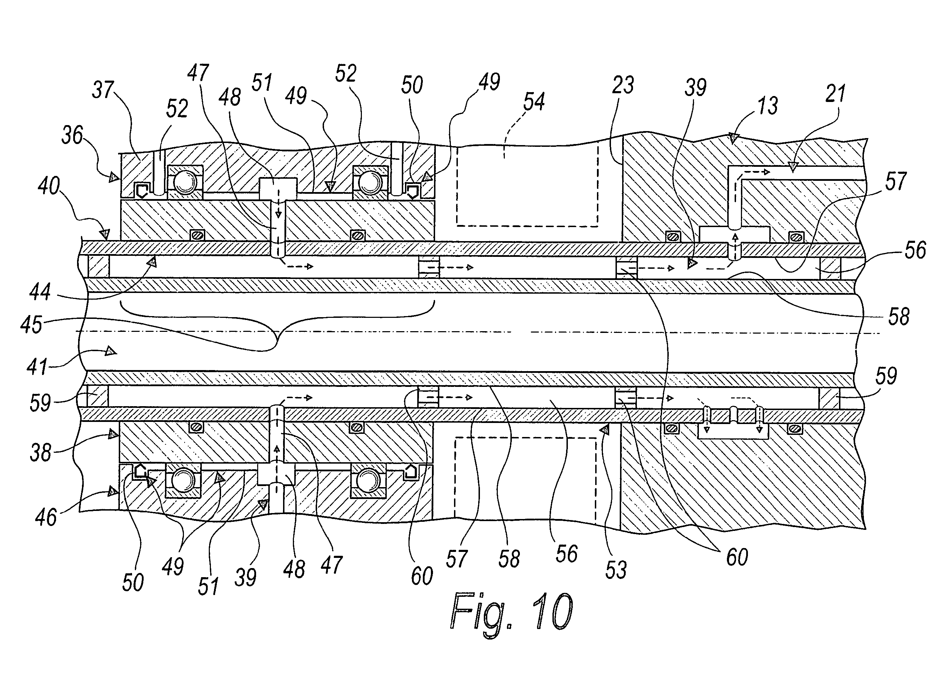

Especially, with reference to Figure 10, in a particular embodiment of the machine tool 10, according to the invention, the appendage 40 advantageously comprises an elongated body 53, which is designed to pass through auxiliary elements 54 of the machine tool 10, and thus the auxiliary elements 54, such as for example a speed shift unit, are interposed between the assembly with male-female coupling 36 and the first end 23 of the boring bar 13.

In this embodiment, the elongated body 53 protrudes from the first end 23 of the boring bar 13 and has, at the assembly with male-female coupling 36, the part 45, which is designed to provide the rotor 38.

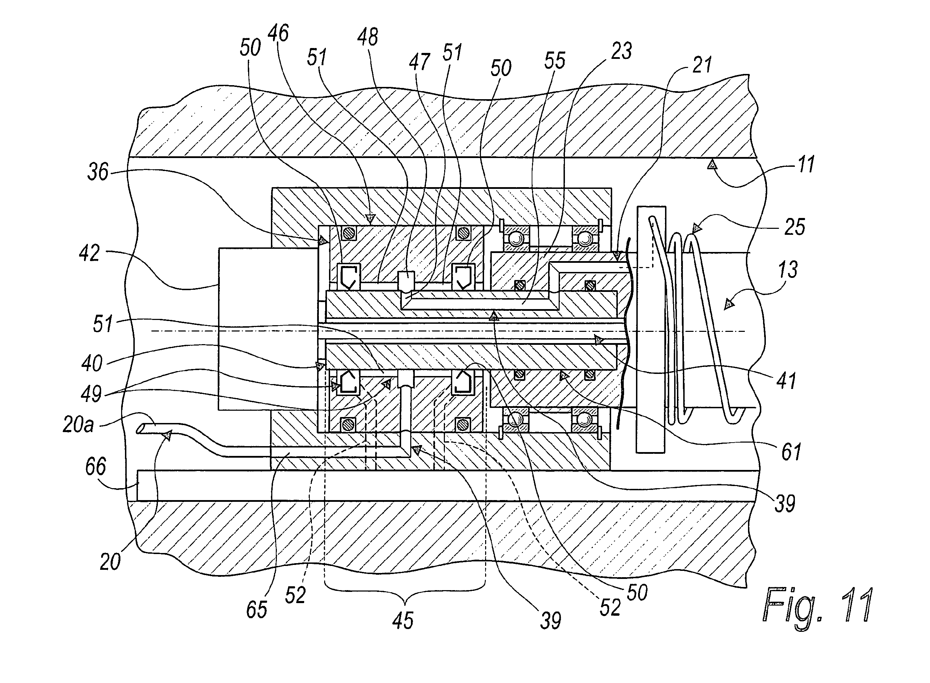

Conveniently, in a first embodiment, shown in particular by way of non-limiting example in Figure 11, the third ducts 39 comprise at least one longitudinal cavity 55 formed within the thickness of the appendage 40.

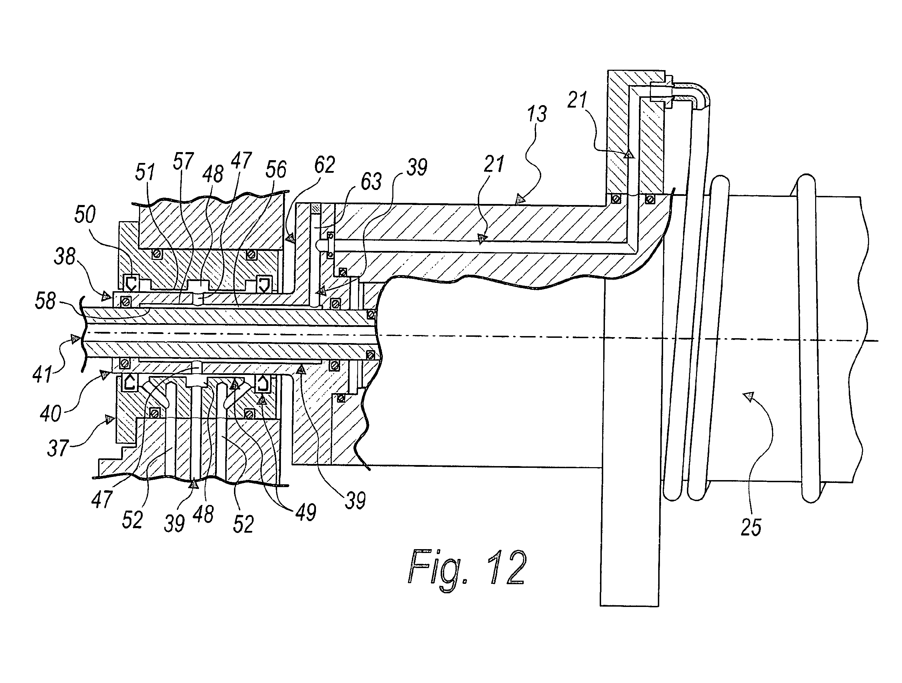

In a second embodiment, shown in particular by way of non-limiting example in Figures 10 and 12, the third ducts 39 comprise an interspace 56 delimited by an internal wall 57 of the appendage 40 and by an external wall 58 of the rod 41 that is accommodated therein.

With reference to Figure 10, in such particular embodiment advantageously there are annular plugs 59 to delimit longitudinally the interspace 56.

Further, annular spacers 60 are conveniently provided which are arranged along the interspace 56 in radial abutment against the internal wall 57 and the external wall 58.

Such radial spacers are conveniently diffusely perforated to allow the passage of fluid along the interspace 56.

Conveniently, in the first embodiment, shown in particular by way of non-limiting example in Figure 11, the appendage 40 comprises a tubular key 61 for connection to the boring bar 13 that is inserted axially and jointly in its first end 23.

Figure 11 shows that the tubular key 61 is conveniently crossed, in its thickness, by the longitudinal cavity 55, as described in the cited first embodiment, and in a technically equivalent manner the tubular key 61 can be provided according to the second described embodiment.

In the second embodiment, shown in particular by way of non-limiting example in Figure 12, the appendage 40 advantageously comprises an end flange 62 that is locked coaxially by way of fixing means such as screws or equivalents to the first end 23 of the boring bar 13.

In this second embodiment, the third ducts 39 further comprise at least one radial cavity 63 that is formed through the end flange 62.

In a third embodiment, not shown in the accompanying drawings, such appendage conveniently is monolithic with the boring bar.

The second connection means 22b preferably comprise a supporting slider 64 for the annular element 46, the third ducts 39 advantageously comprising at least one connecting duct 65 that passes through the slider 64.

moreover, conveniently there is a guide 66 that is associated with the support 11 and supports the slider 64 so that it can slide along the main axis X, jointly with the boring bar 13.

Advantageously, the distribution unit 20 comprises a first component that is fixed to the support 11 and a second component that is connected to the first component and can be adapted to the position of the slider 64 during the operation of the machine.

Such second component conveniently comprises a flexible distribution hose 20a, which is supported for example by a guiding chain, not shown in the accompanying figures, which controls its position with respect to the slider 64 to which it is connected.

The operation of the machine tool 10 according to the invention is as follows.

In conditions for use, the spindle 12 rotates jointly with the boring bar 13, which can slide therein in order to extend inside it, being supported by the film of fluid that is interposed between them at the hydrostatically supported bearings 14.

Such fluid is sent through the boring bar 13 to the spindle 12 and from the boring bar 13 it is received by the annular element 46 by means of the rotor 38, which is formed at the part 45 of the appendage 40, which rotates inside the stator 37.

Conveniently, the rotor 38 has a much smaller diameter than the spindle 12, so that its perimetric speed, with which it entrains the film of fluid that penetrates in it through the third ducts 39, is greatly reduced with respect to the perimetric speed of the spindle 12.

The machine tool 10 according to the invention allows to obtain the rotation rates of the tool that are required by ordinary machinings and at the same time to obtain peripheral rotation speeds of the rotor 38 that are compatible with the use of the sliding gaskets 50 and of the fluid retention gaskets 51, which thus cause limited leaks, respectively due to friction and due to fluid drag.

During the sliding within the spindle 12 of the boring bar 13, said boring bar entrains with it the slider 64 that supports the stator 37, which supplies with fluid the rotor 38 and the appendage 40.

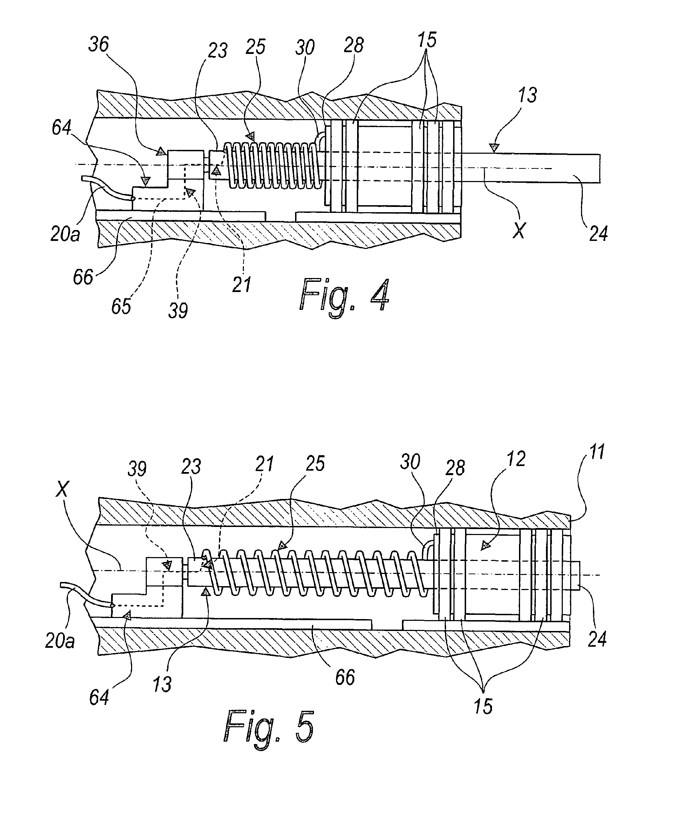

With reference to Figures 4 and 5, during the extension of the boring bar 13 from the support 11, the turns of the tubular element 25, wound around the boring bar 13, are compacted between the spindle 12 and the first end 23 of the boring bar 13; vice versa, during the retraction of the boring bar 13, through the spindle 12, the winding turns of the tubular element 25 are spaced further apart along the boring bar 13, adapting to the distance modulation between the first end 23 of the boring bar 13 and the spindle 12, the winding diameter of said turns around the boring bar remaining constant thanks to the winding and unwinding by the annular flange 28, as already described.

In practice it has been found that the invention achieves the intended aim and objects, providing a machine tool that allows a structurally simple coupling of the boring bar in the spindle that does not require complex and expensive adaptation machinings.

Moreover, a machine tool according to the invention has a high stiffness of the coupling of the spindle, even of large diameter, with its support, since said coupling is provided by means of packs of rolling bearings.

A machine tool according to the invention also allows to use hydrostatic bearings for supporting the boring bar in the spindle, thus allowing plays between the boring bar and the spindle that are greater than in currently known machines with sliding bearings, to the full advantage of the simplicity and cheapness of the corresponding machinings.

Further, the feeding of the hydrostatically supported bearings is achieved with a power dissipation due to fluid drag that is much lower than that generated by currently known machine tools that use this type of bearing.

These power dissipations in fact depend on the relative speed of the elements that compose the rotary manifold for feeding working fluid to the bearings, such speed depending, for an equal angular speed of the rotor with respect to the stator, on the diameter of their coupling.

Moreover, a machine tool according to the invention has fluid losses due to the translational motion of the boring bar in the spindle that are much lower than those of currently known machines that use a boring bar-spindle that performs a combined rotary and translational motion in a fixed support.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A machine tool (10), particularly of the milling and boring type, which comprises:
- a support (11) for a spindle (12) that accommodates coaxially a boring bar (13) that is connected to the spindle (12) by means of hydrostatically supported bearings (14),
- means for the joint rotation of said spindle (12) and of said boring bar (13) about a main machining axis (X),
- means for the translational motion of said boring bar (13) with respect to said spindle (12) along said main axis (X),
- first ducts (18) for feeding fluid to said hydrostatically supported bearings (14) being provided through said spindle (12),
- means (19) for transmitting said fluid from a provided distribution unit (20) to said first ducts (18),
**characterized in that** said transmission means comprise second ducts (21) through said boring bar (13),
- first means (22a) for the connection of said second ducts (21) to said first ducts (18) and
- second means (22b) for the connection of said second ducts (21) to said distribution unit (20),
for the transmission of said fluid from said distribution unit (20) to said hydrostatically supported bearings (14).

2. The machine tool according to claim 1, **characterized in that** said second ducts (21) are provided through a first end (23) of said boring bar (13) that lies opposite a second end (24) thereof that is equipped to support a tool.

3. The machine tool according to one of the preceding claims, **characterized in that** said first connection means (22a) comprise at least one tubular element (25), which connects said second ducts (21) to said first ducts (18).

4. The machine tool according to claim 3, **characterized in that** said at least one tubular element (25) has at least one portion (25a) thereof that is wound spirally around said boring bar (13) and allows its elastic deformation.

5. The machine tool according to claim 4, **characterized in that** said transmission means (19) comprise means (26) for preventing the loosening of said spirally wound portion (25a) on said boring bar (13).

6. The machine tool according to claim 5, **characterized in that** said means (26) for preventing loosening comprise:
- at least one slot (27) that is formed on said boring bar (13) and has a helical arrangement along said main axis (X),
- an annular flange (28), which surrounds said boring bar (13) and is connected to said spindle (12) so that it can rotate with respect to it about said main axis (X), said annular flange (28) having at least one tooth (29) that engages in a manner that allows longitudinal sliding said at least one slot (27), in order to be rotated about said main axis (X) by said boring bar (13) during its sliding in said spindle (12) along said main axis (X), said annular flange (28) being further connected to an end of said spirally wound portion (25a), in order to turn it when it is rotated by said boring bar (13) and thus wind or unwind thereon said spirally wound portion (25a) in order to keep its winding diameter substantially constant.

7. The machine tool according to one of the preceding claims, **characterized in that** said second connection means (22b) comprise an assembly with male-female coupling (36) that is composed of a stator (37) that is associated with said distribution unit (20) and a rotor (38) that is associated with said boring bar (13) and can rotate with respect to said stator (37), third ducts (39) being provided for the connection of said second ducts (21) to said distribution unit (20) which pass through said assembly with male-female coupling (36).

8. The machine tool according to claim 7, **characterized in that** said boring bar (13) is axially hollow and is designed to accommodate a tubular rod (41) that is adapted to feed lubricant to said tool and/or to disengage it from said second end (24) by sliding in said boring bar (13) along said main axis (X), said assembly with male-female coupling (36) providing a compartment (43) for the passage of said rod (41).

9. The machine tool according to claim 8, **characterized in that** an appendage (40) is connected to said boring bar (13) and protrudes from it at said first end (23), a sliding hole (44) for said rod (41) being provided axially thereto, said rotor (38) being of the type that is internal to said stator (37) and said appendage (40) having at least one part (45) that is designed to form said rotor (38).

10. The machine tool according to claim 8, **characterized in that** an appendage (40) is connected to said boring bar (13) and protrudes from it at said first end (23), a sliding hole (44) for said rod (41) being formed axially thereto, said rotor (38) being of the type that is external to said stator (37) and said appendage (40) having at least one part (45) thereof that is designed to form said rotor (38).

11. The machine tool according to claim 10, **characterized in that** said stator (37) comprises an annular element (46) for accommodating said rotor (38), said third ducts (39) comprising at least one radial hole (47) that is formed on said rotor (38) and faces an annular slot (48) for the distribution of said fluid that is formed inside said annular element (46), gaskets (49) for retaining said fluid being provided to contrast the seepage of said fluid from said assembly with male-female coupling (36).

12. The machine tool according to claim 11, **characterized in that** said appendage (40) comprises an elongated body that is designed to pass through auxiliary elements of the machine tool, said elongated body protruding from said first end (23) of said boring bar (13) and having, proximate to its free end, said part (45) designed to form said rotor (38).

13. The machine tool according to claim 12, **characterized in that** said third ducts (39) comprise at least one longitudinal cavity (55) formed within the thickness of said appendage (40).

14. The machine tool according to claim 12, **characterized in that** said third ducts (39) comprise an interspace (56) that is delimited by an internal wall (57) of said appendage (40) and by an external wall (58) of said rod (41) that is accommodated therein.

15. The machine tool according to one of the preceding claims 9 and 10, **characterized in that** said appendage (40) comprises a tubular key (61) for connection to said boring bar (13) which is inserted axially and jointly within said first end (23).

16. The machine tool according to one of the preceding claims 9 and 10, **characterized in that** said appendage (40) comprises an end flange (62) that is locked coaxially, by way of fixing means, to said first end (23) of said boring bar (13), said third ducts (39) comprising at least one radial cavity (63) formed through said end flange (62).

17. The machine tool according to one of the preceding claims 9 and 10, **characterized in that** said appendage (40) is monolithic with said boring bar (13).

18. The machine tool according to claim 1, **characterized in that** said second connection means (22b) comprise a slider (64) for supporting said annular element (46), said third ducts (39) comprising at least one connecting duct (65) that passes through said slider (64), a guide (66) being provided which is associated with said support (11) and supports said slider (64) so that it can slide along said main axis (X), jointly with said boring bar (13).

## Patentansprüche

1. Eine Werkzeugmaschine (10), insbesondere vom Fräs- und Bohrtyp, die Folgendes umfasst:
- einen Träger (11) für eine Spindel (12), die koaxial eine Bohrstange (13) aufnimmt, welche mit der Spindel (12) durch hydrostatisch getragene Lager (14) verbunden ist,
- Mittel für die gemeinsame Drehung der Spindel (12) und der Bohrstange (13) um eine Haupt-Bearbeitungsachse (X),
- Mittel für die Translationsbewegung der Bohrstange (13) im Verhältnis zu der Spindel (12) entlang der Hauptachse (X),
- erste Leitungen (18) für die Zufuhr von Flüssigkeit an die hydrostatisch getragenen Lager (14), geführt durch die Spindel (12),
- Mittel (19) für die Übertragung der Flüssigkeit von einer bereitgestellten Verteilungseinheit (20) an die ersten Leitungen (18),
**dadurch gekennzeichnet, dass** die Übertragungsmittel zweite Leitungen (21) durch die Bohrstange (13) umfassen,
- erste Mittel (22a) für die Verbindung der zweiten Leitungen (21) mit den ersten Leitungen (18) und
- zweite Mittel (22b) für die Verbindung der zweiten Leitungen (21) mit der Verteilungseinheit (20),
für die Übertragung der Flüssigkeit von der Verteilungseinheit (20) an die hydrostatisch getragenen Lager (14).

2. Die Werkzeugmaschine gemäß Anspruch 1, **dadurch gekennzeichnet, dass** die zweiten Leitungen (21) durch ein erstes Ende (23) der Bohrstange (13) verlaufen, das einem zweiten Ende (24) davon gegenüberliegt, welches ausgebildet ist, um ein Werkzeug zu tragen.

3. Die Werkzeugmaschine gemäß einem der obigen Ansprüche, **dadurch gekennzeichnet, dass** die ersten Verbindungsmittel (22a) mindestens ein röhrenförmiges Element (25) umfassen, welches die zweiten Leitungen (21) mit den ersten Leitungen (18) verbindet.

4. Die Werkzeugmaschine gemäß Anspruch 3, **dadurch gekennzeichnet, dass** das mindestens eine röhrenförmige Element (25) mindestens einen Abschnitt (25a) davon hat, der spiralförmig um die Bohrstange (13) gewunden ist und seine elastische Verformung ermöglicht.

5. Die Werkzeugmaschine gemäß Anspruch 4, **dadurch gekennzeichnet, dass** die Übertragungsmittel (19) Mittel (26) umfassen, um die Lockerung des spiralförmig gewundenen Abschnitts (25a) an der Bohrstange (13) zu verhindern.

6. Die Werkzeugmaschine gemäß Anspruch 5, **dadurch gekennzeichnet, dass** die Mittel (26) zur Verhinderung der Lockerung Folgendes umfassen:
- mindestens einen Schlitz (27), der an der Bohrstange (13) geformt ist und eine schraubenförmige Anordnung entlang der Hauptachse (X) hat,
- einen ringförmigen Flansch (28), der die Bohrstange (13) umgibt und mit der Spindel (12) so verbunden ist, dass er sich im Verhältnis zu ihr um die Hauptachse (X) drehen kann, wobei der ringförmige Flansch (28) mindestens einen Zahn (29) hat, der auf eine Art, die ein Längsgleiten ermöglicht, in den mindestens einen Schlitz (27) eingreift, um von der Bohrstange (13) während ihres Gleitens in der Spindel (12) entlang der Hauptachse (X) um die Hauptachse (X) gedreht zu werden, wobei der ringförmige Flansch (28) weiter mit einem Ende des spiralförmig gewundenen Abschnitts (25a) verbunden ist, um ihn zu drehen, wenn er von der Bohrstange (13) gedreht wird, und so darauf den spiralförmig gewundenen Abschnitt (25a) auf- oder abzuwickeln, um seinen Wicklungsdurchmesser im Wesentlichen konstant zu halten.

7. Die Werkzeugmaschine gemäß einem der obigen Ansprüche, **dadurch gekennzeichnet, dass** die zweiten Verbindungsmittel (22b) einen Aufbau mit Vater-und-Mutter-Kupplung (36) umfassen, der aus einem Stator (37) besteht, welcher mit der Verteilungseinheit (20) verbunden ist, und einem Rotor (38), der mit der Bohrstange (13) verbunden ist und sich im Verhältnis zu dem Stator (37) drehen kann, wobei dritte Leitungen (39) für die Verbindung der zweiten Leitungen (21) mit der Verteilungseinheit (20) bereitgestellt sind, die durch den Aufbau mit Vater-und-Mutter-Kupplung (36) verlaufen.

8. Die Werkzeugmaschine gemäß Anspruch 7, **dadurch gekennzeichnet, dass** die Bohrstange (13) axial hohl und konstruiert ist, um eine rohrförmige Stange (41) aufzunehmen, die ausgebildet ist, um dem Werkzeug Schmiermittel zuzuführen und/oder es durch Gleiten in der Bohrstange (13) entlang der Hauptachse (X) von dem zweiten Ende (24) zu lösen, wobei der Aufbau mit Vater-und-Mutter-Kupplung (36) einen Hohlraum (43) für das Hindurchführen der Stange (41) bereitstellt.

9. Die Werkzeugmaschine gemäß Anspruch 8, **dadurch gekennzeichnet, dass** ein Anhang (40) mit der Bohrstange (13) verbunden ist und an dem ersten Ende (23) aus ihr herausragt, wobei ein Rollloch (44) für die Stange (41) axial dazu bereitgestellt ist und der Rotor (38) von der Art ist, die innerhalb des Stators (37) liegt, und der Anhang (40) mindestens einen Teil (45) hat, der konstruiert ist, um den Rotor (38) zu bilden.

10. Die Werkzeugmaschine gemäß Anspruch 8, **dadurch gekennzeichnet, dass** ein Anhang (40) mit der Bohrstange (13) verbunden ist und an dem ersten Ende (23) aus ihr herausragt, wobei ein Rollloch (44) für die Stange (41) axial dazu geformt ist und der Rotor (38) von der Art ist, die außerhalb des Stators (37) liegt, und der Anhang (40) mindestens einen Teil (45) davon hat, der konstruiert ist, um den Rotor (38) zu bilden.

11. Die Werkzeugmaschine gemäß Anspruch 10, **dadurch gekennzeichnet, dass** der Stator (37) ein ringförmiges Element (46) zur Aufnahme des Rotors (38) umfasst, wobei die dritten Leitungen (39) mindestens ein radiales Loch (47) umfassen, das an dem Rotor (38) geformt ist und einem Kreisschlitz (48) für die Verteilung der Flüssigkeit zugewandt ist, der in dem ringförmigen Element (46) geformt ist, wobei Dichtungen (49) zum Zurückhalten der Flüssigkeit bereitgestellt sind, um dem Aussickern der Flüssigkeit aus dem Aufbau mit Vater-und-Mutter-Kupplung (36) entgegenzuwirken.

12. Die Werkzeugmaschine gemäß Anspruch 11, **dadurch gekennzeichnet, dass** der Anhang (40) einen verlängerten Körper umfasst, der konstruiert ist, um durch zusätzliche Elemente der Werkzeugmaschine zu verlaufen, wobei der verlängerte Körper aus dem ersten Ende (23) der Bohrstange (13) herausragt und nahe seinem freien Ende den Teil (45) hat, der konstruiert ist, um den Rotor (38) zu bilden.

13. Die Werkzeugmaschine gemäß Anspruch 12, **dadurch gekennzeichnet, dass** die dritten Leitungen (39) mindestens einen länglichen Hohlraum (55) umfassen, der in der Dicke des Anhangs (40) geformt ist.

14. Die Werkzeugmaschine gemäß Anspruch 12, **dadurch gekennzeichnet, dass** die dritten Leitungen (39) einen Zwischenraum (56) umfassen, der von einer Innenwand (57) des Anhangs (40) und von einer Außenwand (58) der Stange (41) begrenzt wird, die darin untergebracht ist.

15. Die Werkzeugmaschine gemäß einem der obigen Ansprüche 9 und 10, **dadurch gekennzeichnet, dass** der Anhang (40) einen Rohrschlüssel (61) für die Verbindung mit der Bohrstange (13) umfasst, der axial und gemeinsam in das erste Ende (23) eingesetzt wird.

16. Die Werkzeugmaschine gemäß einem der obigen Ansprüche 9 und 10, **dadurch gekennzeichnet, dass** der Anhang (40) einen Endflansch (62) umfasst, welcher durch Befestigungsmittel koaxial mit dem ersten Ende (23) der Bohrstange (13) blockiert ist, wobei die dritten Leitungen (39) mindestens einen radialen Hohlraum (63) umfassen, der durch den Endflansch (62) verläuft.

17. Die Werkzeugmaschine gemäß einem der obigen Ansprüche 9 und 10, **dadurch gekennzeichnet, dass** der Anhang (40) mit der Bohrstange (13) monolithisch ist.

18. Die Werkzeugmaschine gemäß Anspruch 1, **dadurch gekennzeichnet, dass** die zweiten Verbindungsmittel (22b) einen Schieber (64) zum Tragen des ringförmigen Elements (46) umfassen, wobei die dritten Leitungen (39) mindestens eine Verbindungsleitung (65) umfassen, die durch den Schieber (64) verläuft, wobei eine Führung (66) bereitgestellt ist, die mit dem Träger (11) verbunden ist und den Schieber (64) so trägt, dass er gemeinsam mit der Bohrstange (13) entlang der Hauptachse (X) gleiten kann.

## Revendications

1. Machine-outil (10), en particulier du type pour le fraisage et l'alésage, qui comprend :
- un support (11) pour une broche (12) qui loge coaxialement une barre d'alésage (13) qui est raccordée à la broche (12) au moyen de paliers supportés hydrostatiquement (14),
- des moyens permettant une rotation commune de ladite broche (12) et de ladite barre d'alésage (13) autour d'un axe d'usinage principal (X),
- des moyens permettant un mouvement de translation de ladite barre d'alésage (13) par rapport à ladite broche (12) le long dudit axe principal (X),
- des premiers conduits (18) permettant d'alimenter en fluide lesdits paliers supportés hydrostatiquement (14) qui sont prévus à travers ladite broche (12),
- des moyens (19) permettant de transmettre ledit fluide d'une unité de distribution prévue (20) auxdits premiers conduits (18),
**caractérisée en ce que** lesdits moyens de transmission comprennent des deuxièmes conduits (21) à travers ladite barre d'alésage (13),
- des premiers moyens (22a) permettant de raccorder lesdits deuxièmes conduits (21) auxdits premiers conduits (18) et
- des seconds moyens (22b) permettant de raccorder lesdits deuxièmes conduits (21) à ladite unité de distribution (20),
permettant la transmission dudit fluide de ladite unité de distribution (20) auxdits paliers supportés hydrostatiquement (14).

2. Machine-outil selon la revendication 1, **caractérisée en ce que** lesdits deuxièmes conduits (21) sont prévus à travers une première extrémité (23) de ladite barre d'alésage (13) qui est située opposée à une seconde extrémité (24) de celle-ci qui est équipée pour supporter un outil.

3. Machine-outil selon l'une des revendications précédentes, **caractérisée en ce que** lesdits premiers moyens de raccordement (22a) comprennent au moins un élément tubulaire (25), qui raccorde lesdits deuxièmes conduits (21) auxdits premiers conduits (18).

4. Machine-outil selon la revendication 3, **caractérisée en ce que** ledit au moins un élément tubulaire (25) a au moins une de ses portions (25a) qui est enroulée en spirale autour de ladite barre d'alésage (13) et qui permet sa déformation élastique.

5. Machine-outil selon la revendication 4, **caractérisée en ce que** lesdits moyens de transmission (19) comprennent des moyens (26) permettant d'empêcher le desserrage de ladite portion enroulée en spirale (25a) sur ladite barre d'alésage (13).

6. Machine-outil selon la revendication 5, **caractérisée en ce que** lesdits moyens (26) permettant d'empêcher le desserrage comprennent .
- au moins une fente (27) qui est formée sur ladite barre d'alésage (13) et a un agencement hélicoïdal le long dudit axe principal (X),
- une bride annulaire (28), qui entoure ladite barre d'alésage (13) et est raccordée à ladite broche (12) de sorte qu'elle peut tourner par rapport à cette dernière autour dudit axe principal (X), ladite bride annulaire (28) ayant au moins une dent (29) qui se met en prise d'une façon qui permet un coulissement longitudinal de ladite au moins une fente (27) afin qu'elle soit mise en rotation autour dudit axe principal (X) par ladite barre d'alésage (13) pendant son coulissement dans ladite broche (12) le long dudit axe principal (X), ladite bride annulaire (28) étant en outre raccordée à une extrémité de ladite portion enroulée en spirale (25a) afin de la tourner lorsqu'elle est mise en rotation par ladite barre d'alésage (13) et ainsi d'enrouler ou de dérouler sur celle-ci ladite portion enroulée en spirale (25a) afin de maintenir son diamètre d'enroulement sensiblement constant.

7. Machine-outil selon l'une des revendications précédentes, **caractérisée en ce que** lesdits seconds moyens de raccordement (22b) comprennent un ensemble doté d'un raccord mâle-femelle (36) qui est composé d'un stator (37) qui est associé à ladite unité de distribution (20) et d'un rotor (38) qui est associé à ladite barre d'alésage (13) et peut entrer en rotation par rapport audit stator (37), des troisièmes conduits (39) étant prévus pour le raccordement desdits deuxièmes conduits (21) à ladite unité de distribution (20) qui passent à travers ledit ensemble doté d'un raccord mâle-femelle (36).

8. Machine-outil selon la revendication 7, **caractérisée en ce que** ladite barre d'alésage (13) est axialement creuse et est conçue pour loger une tige tubulaire (41) qui est adaptée pour alimenter en lubrifiant ledit outil et/ou pour le mettre hors de prise de ladite seconde extrémité (24) par coulissement dans ladite barre d'alésage (13) le long dudit axe principal (X), ledit ensemble doté d'un raccord mâle-femelle (36) fournissant un compartiment (23) pour le passage de ladite tige (41).

9. Machine-outil selon la revendication 8, **caractérisée en ce qu'**un appendice (40) est raccordé à ladite barre d'alésage (13) et fait saillie à partir de celle-ci au niveau de ladite première extrémité (23), un trou coulissant (44) pour ladite tige (41) étant agencé axialement par rapport à cette dernière, ledit rotor (38) étant du type qui est interne audit stator (37) et ledit appendice (40) ayant au moins une partie (45) qui est conçue pour former ledit rotor (38).

10. Machine-outil selon la revendication 8, **caractérisée en ce qu'**un appendice (40) est raccordé à ladite barre d'alésage (13) et fait saillie à partir de celle-ci au niveau de ladite première extrémité (23), un trou coulissant (44) pour ladite tige (41) étant formé axialement par rapport à celle-ci, ledit rotor (38) étant du type qui est externe audit stator (37) et ledit appendice (40) ayant au moins une partie (45) qui est conçue pour former ledit rotor (38).

11. Machine-outil selon la revendication 10, **caractérisée en ce que** ledit stator (37) comprend un élément annulaire (46) permettant de loger ledit rotor (38), lesdits troisièmes conduits (39) comprenant au moins un trou radial (47) qui est formé sur ledit rotor (38) et fait face à une fente annulaire (48) pour la distribution dudit fluide qui est formée à l'intérieur dudit élément annulaire (46), des joints (49) permettant de retenir ledit fluide étant prévus pour éviter une fuite dudit fluide depuis ledit ensemble doté d'un raccord mâle-femelle (36).

12. Machine-outil selon la revendication 11, **caractérisée en ce que** ledit appendice (40) comprend un corps allongé qui est conçu pour passer à travers des éléments auxiliaires de la machine-outil, ledit corps allongé faisant saillie à partir de ladite première extrémité (23) de ladite barre d'alésage (13) et ayant, à proximité de son extrémité libre, ladite partie (45) conçue pour former ledit rotor (38).

13. Machine-outil selon la revendication 12, **caractérisée en ce que** lesdits troisièmes conduits (39) comprennent au moins une cavité longitudinale (55) formée à l'intérieur de l'épaisseur dudit appendice (40).

14. Machine-outil selon la revendication 12, **caractérisée en ce que** lesdits troisièmes conduits (39) comprennent un espace intermédiaire (56) qui est délimité par une paroi interne (57) dudit appendice (40) et par une paroi externe (58) de ladite tige (41) qui est logée à l'intérieur.

15. Machine-outil selon l'une des revendications 9 et 10 précédentes, **caractérisée en ce que** ledit appendice (40) comprend une clé tubulaire (61) pour raccordement à ladite barre d'alésage (13) qui est insérée axialement et de façon commune à l'intérieur de ladite première extrémité (23).

16. Machine-outil selon l'une des revendications 9 et 10 précédentes, **caractérisée en ce que** ledit appendice (40) comprend une bride d'extrémité (62) qui est verrouillée coaxialement, au moyen de moyens de fixation, à ladite première extrémité (23) de ladite barre d'alésage (13), lesdits troisièmes conduits (39) comprenant au moins une cavité radiale (63) formée à travers ladite bride d'extrémité (62).

17. Machine-outil selon l'une des revendications 9 et 10 précédentes, **caractérisée en ce que** ledit appendice (40) est d'un seul bloc avec ladite barre d'alésage (13).

18. Machine-outil selon la revendication 1, **caractérisée en ce que** lesdits seconds moyens de raccordement (22b) comprennent un coulisseau (64) permettant de supporter ledit élément annulaire (46), lesdits troisièmes conduits (39) comprenant au moins un conduit de raccordement (65) qui passe à travers ledit coulisseau (64), un guide (66) étant prévu qui est associé audit support (11) et supporte ledit coulisseau (64) de sorte qu'il peut coulisser le long dudit axe principal (X), de façon commune avec ladite barre d'alésage (13).
